(19) Europäisches Patentamt
European Patent Office
Office européen des brevets

(11) **EP 1 785 692 A2**

(12) **EUROPÄISCHE PATENTANMELDUNG**

(43) Veröffentlichungstag:
16.05.2007 Patentblatt 2007/20

(51) Int Cl.:
***G01B 11/06*** *(2006.01)*

(21) Anmeldenummer: 06122125.5

(22) Anmeldetag: **11.10.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **21.10.2005 DE 102005050432**

(71) Anmelder: **rap.ID Particle Systems GmbH**
**12555 Berlin (DE)**

(72) Erfinder:
• **Holz, Lothar**
**12557, Berlin (DE)**
• **Roessling, Georg**
**16548, Glienicke (DE)**
• **Lankers, Markus**
**15566 Schöneiche (DE)**

(74) Vertreter: **Eisenführ, Speiser & Partner**
**Anna-Louisa-Karsch-Strasse 2**
**10178 Berlin (DE)**

(54) **Verfahren und Vorrichtung zum Messen von Schichtdicken und Schichthomogenitäten in transparenten, innsenseitig gleitmittel- und hydrophobierungsbeschichteten Behältern, inbesondere pharmazeutischen Behältnissen**

(57) Die Erfindung betrifft ein Verfahren zum Messen von Schichtdicken und Schichthomogenitäten in transparenten, innenseitig gleitmittel- und hydrophobierungsbeschichteten Behältern, wobei eine Linse (2) polychromatisches Licht auf die Innenbeschichtung (1B) des Behälters (1) fokussiert, das reflektierte Licht wieder erfasst, in ein Spektrometer (5) einkoppelt und über einen empfindlichen Vielkanal-Detektor (7) aufzeichnet, und entsprechende Signale an eine Auswerte-Elektronik (8) transferiert werden, die die Signale digitalisiert und aus dem Interferenzmuster die Schichtdicke berechnet.

Fig. 1

**Beschreibung**

Die Erfindung betrifft ein Verfahren entsprechend dem Oberbegriff des Patentanspruchs 1 sowie eine Vorrichtung zum Ausführen des Verfahrens gemäß Oberbegriff des Patentanspruchs 9.

Für die Optimierung und richtige Dosierung von Gleit- und Hydrophobierungsmitteln, wie z. B. Silikonölen und Silikonölemulsionen, muss die Homogenität und Schichtdicke des Gleitfilms im ungeöffneten Behältnis zerstörungsfrei messbar sein.

Silikonöl und Silikonölemulsionen werden in der pharmazeutischen Produktion zum Beschichten von Flaschen und Spritzen als Gleit- oder Hydrophobierungsmittel verwendet. Es ist bekannt, dass die resultierenden Gleitmittelschichten labortechnisch mit Hilfe von Kraft/ Wegdiagrammen (Tobias Mundry, Dissertation HU-Berlin "Einbrennsilikonisierung bei pharmazeutischenGlaspackmitteln" - Analytische Studien eines Produktionsprozesses), Extraktion und spektroskopische Bestimmung des Gleitmittels ( Spanjers L.G.C. & de Kleijn J.P.: "The Determination of Traces of Silicon Oil in Pharmaceutical Preparations By Atomic Absorption Spectroscopy" Pharm. Weekbl. Sci. Ed. 7(6): 291 [1985]), Kontaktwinkelmessungen (Spitze, L.A. & Richards, D.O.: "Surface Studies on Glass Part 1. Contact Angles" J. Appl. Phys. 18: 904-11 [1947]) oder IR-mikroskopisch (Gardella J.A., Jr., Grobe G.L., Hopson W.L. & Eyring E.M.: "Comparison of Attenuated Total Reflectance and Photoacoustic Sampling for Surface Analysis of Polymer Mixtures by Fourier Transform Infrared Spectroscopy" Anal. Chem. 56: 1169-1177, [1984]) untersucht und charakterisiert werden können. Bei diesen Untersuchungen müssen jedoch die Behälter entleert und zerstört werden. Die Proben sind für spätere weitere Untersuchungen nicht mehr zugänglich. Weiterhin ist eine 100%ige Produktionskontrolle mit diesen zerstörenden Prüfmethoden nicht möglich.

Weiterhin ist bekannt, dass an dünnen Schichten unterschiedlicher Brechungsindices reflektiertes Licht ein Interferenzmuster aufweist, dass die Berechnung eines Brechungsindex oder der Schichtdicke ermöglicht. Diese Technik wird zur Charakterisierung von Vergütungen im Bereich der Optik bzw. zur Herstellung von Interferenzfiltern eingesetzt.(Warren J. Smith, Modern Optical Engineering)

Aufgabe der Erfindung ist es, ein einfaches Verfahren und eine dazugehörige Vorrichtung zur berührungslosen und zerstörungsfreien Messung der Dicke von Gleitmittel- und Hydrophobierungsfilmen in gefüllten und ungefüllten transparenten Behältern, insbesondere pharmazeutischen Behältnissen, mit Hilfe der Interferenzreflektometrie zur Verfügung zu stellen. Außerdem soll auch eine Homogenitätsbestimmung der Beschichtung möglich sein.

Diese Aufgabe wird durch ein Verfahren mit den Merkmalen des Patentanspruchs 1 sowie eine Vorrichtung mit den Merkmalen des Patenanspruchs 9 gelöst.

Vorteilhafte Ausgestaltungen der Erfindung finden sich in den zugehörigen Unteransprüchen.

Dünne Schichten können idealerweise mit Hilfe von Interferenzverfahren charakterisiert werden. Hierzu wird ein fokussiertes Lichtbündel von vorzugsweise polychromatischem Licht auf die zu messende Schicht im entsprechenden Behältnis fokussiert. Das reflektierte Licht wird in ein Spektrometer eingekoppelt und mit einem empfindlichen Vielkanal-Detektor detektiert. Das resultierende Signal wird zur Bestimmung der Schichtdicke an einen Computer übertragen und die Schichtdicke berechnet. Die Berechnung der Schichtdicke erfolgt z. B. gemäß der folgenden Formel:

$$2*D*n_D = \frac{\lambda_{max1} * \lambda_{max2}}{\lambda_{max1} - \lambda_{max2}}$$

mit D= Schichtdicke, nD= Brechungsindex der Grenzschicht, $\lambda_{max1}$= Interferenzmaximum1, $\lambda_{max2}$= Interferenzmaximum2 für benachbarte Interferenzmaxima.

Die Aussage über die Homogenität der Schicht lässt sich über die Abbildung des reflektierten Lichts auf eine bildgebende Kamera, z. B. eine CCD-Kamera, erreichen. Bilder, die keine Änderung des Farbtons aufweisen, zeigen eine sehr homogene Schicht, wobei starke Farbwechsel auf starke Inhomogenitäten der Gleitmittelschicht hinweisen. Eine sehr dünne Schicht (d-50 nm) dunkelt das Bild ab. Eine große Schichtdicke (D>1 μm) lässt das Bild grau erscheinen. Im Zwischenbereich der Schichtdicken sind alle Spektralfarben vorherrschend.

Ein großer Vorteil dieses Verfahrens ist die Möglichkeit, die Schichtdicke in gefüllten und ungefüllten Behältnissen zu bestimmen, ohne diese zerstören zu müssen, so dass eine Überwachung von Produktionsprozessen und Endprodukten möglich ist.

Es ist weiterhin von Vorteil, wenn das Licht auf den in gefüllten Behältnissen üblicherweise mit einer Luftblase gefüllten Bereich fokussiert wird, um ein stärkeres Reflektionssignal der zu messenden Schicht zu erhalten.

Durch eine Rotation des Behältnisses ist eine Mittelung der Schichtdicke möglich.

Als günstig erweist sich weiterhin, die Schichtdickenbestimmung mit einer Bewegung des Messobjekts zu kombinieren und so eine Inlinekontrolle der Silikonschicht zu ermöglichen.

Die Erfindung wird nachfolgend unter Bezugnahme auf die Zeichnungen durch Ausführungsbeispiele näher beschrieben. Identische oder wirkungsgleiche Komponenten werden mit gleichen Bezugszeichen bezeichnet.

Es zeigen:

Figur 1: eine schematische Ansicht der Vorrichtung zur Schichtdickenbestimmung gemäß einer ersten Ausführungsform;

Figur 2: das Ergebnis einer Schichtdickenbestimmung gemäß der ersten Ausführungsform ;

Figur 3: eine schematische Ansicht der Vorrichtung zur Homogenitätsbestimmung gemäß einer ersten Ausführungsform;

Figur 4: eine schematische Ansicht der Vorrichtung zur Schichtdickenbestimmung gemäß einer zweiten Ausführungsform;

Figur 5: eine schematische Ansicht der Vorrichtung zur Homogenitätsbestimmung gemäß einer zweiten Ausführungsform;

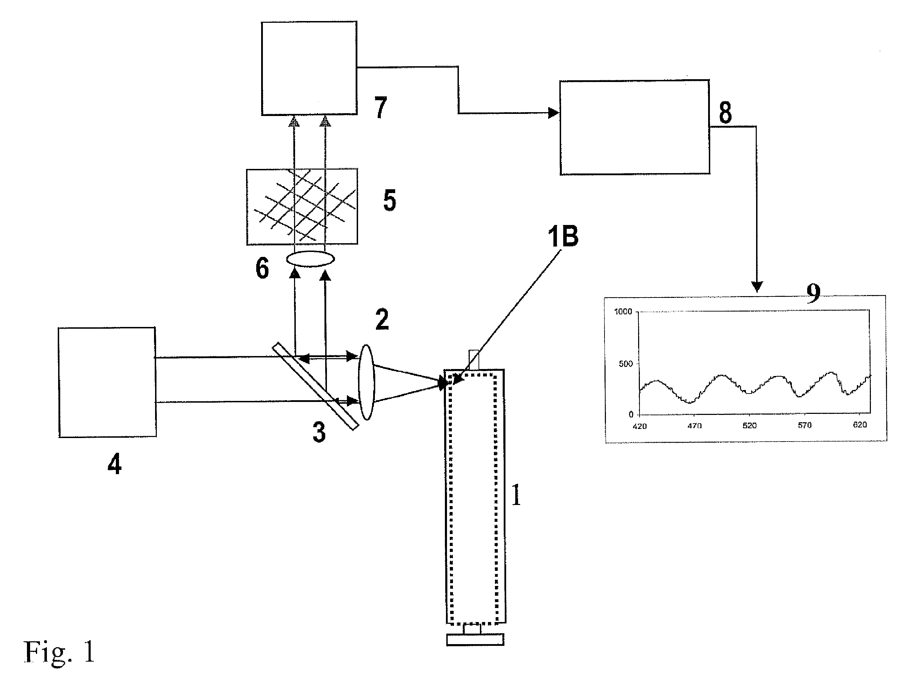

Gemäß Figur 1 wird der Strahl aus einer polychromatischen Lichtquelle 4 über einen halbtransparenten Umlenkspiegel 3 und eine Linse 2 durch die transparente Wand des Behältnisses 1 auf die Innenseite der Wand, die den Silikonfilm 1 B trägt, fokussiert. Das reflektierte Licht tritt durch den halbtransparenten Spiegel 3 aus und wird mit einer Linse 6 in ein Spektrometer 5 eingekoppelt und mit einem empfindlichen Vielkanal-Detektor 7 detektiert. Das resultierende Signal der Intensität über die Wellenlänge wird zur Bestimmung der Schichtdicke an einen Computer 8 übertragen, die Schichtdicke berechnet und ausgegeben 9. Die Berechnung der Schichtdicke erfolgt z. B. gemäß der folgenden Formel:

$$2*D*n_D = \frac{\lambda_{\max 1} * \lambda_{\max 2}}{\lambda_{\max 1} - \lambda_{\max 2}}$$

mit D= Schichtdicke, nD= Brechungsindex der Grenzschicht, $\lambda_{\max 1}$= Interferenzmaximum1, $\lambda_{\max 2}$= Interferenzmaximum2 für benachbarte Interferenzmaxima.

Der nutzbare Wellenlängenbereich ist abhängig vom Material und liegt bei Glas beispielsweise bei 300nm-2.5 $\mu$m. Daraus folgt ein Schichtdickenmessbereich von 100 nm - 50 $\mu$m gemäß der Formel

$$2*D*n_D = \frac{\lambda_{\max 1} * \lambda_{\max 2}}{\lambda_{\max 1} - \lambda_{\max 2}}$$

Der Messbereich kann durch Verwendung von Fitroutinen unter Verwendung der Dispersion der Brechzahl der Silikonschichten nach kleineren Schichtdicken erweitert werden.

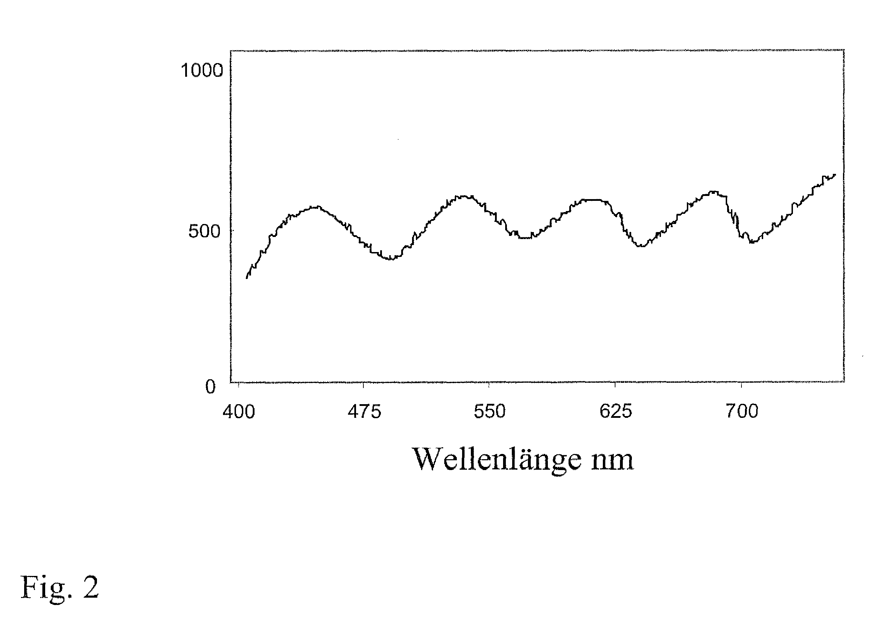

Fig. 2 zeigt das Interferenzmuster, das gemäß dem zuvor beschriebenen Verfahren mit der Vorrichtung gemäß der ersten Ausführungsform durch das Bestrahlen der Innenfläche mit polychromatischem Licht von einer medizinischen Spritze erhalten wurde. Zur Detektion wurde ein Spektrometer 5 mit 150 mm Brennweite und ein CCD-Detektor 7 benutzt. Das Licht wurde im Bereich 420-700 nm aufgezeichnet. Die ermittelte Schichtdicke beträgt 1.1 $\mu$m.

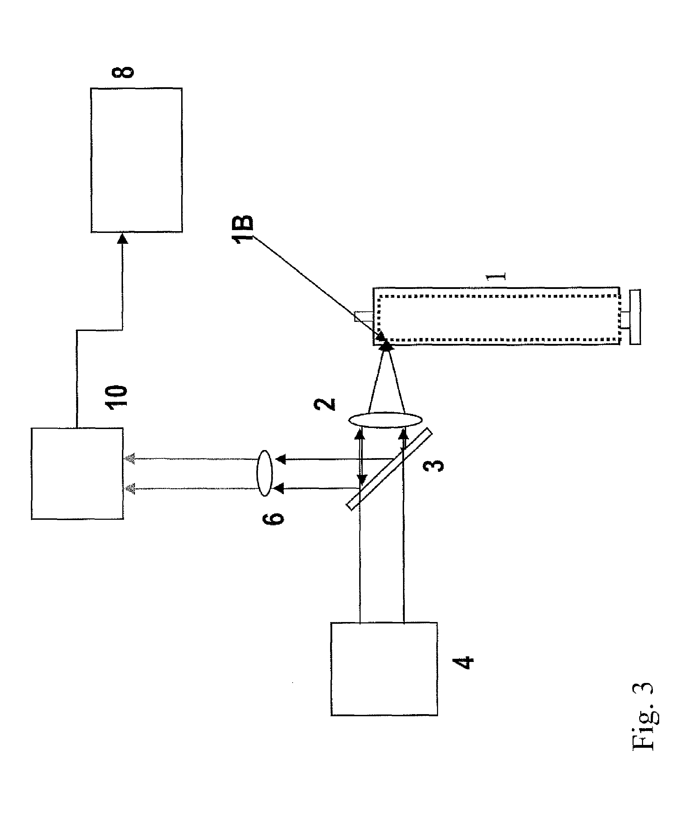

Eine Ausführungsform zur Bestimmung der Homogenität ist in Fig. 3 zu sehen.

Der Strahl aus einer Lichtquelle 4 wird über einen halbtransparenten Umlenkspiegel 3 und eine Linse 2 durch die transparente Wand des Behältnisses 1 auf die Innenseite der Wand, die den Silikonfilm 1 B trägt, fokussiert. Das reflektierte Licht wird über den halbtransparenten Spiegel 3 und eine Linse 6 auf eine Videokamera 10 abgebildet. Das resultierende Signal wird zur Speicherung und Anzeige des Signals an einen Computer 8 übertragen und die Homogenität beurteilt. Der Messbereich der Weißlichtinterferenz liegt im Bereich niedriger Interferenzordnung: ca. 50nm bis 1 $\mu$m. Die Messung der Schichtdicke erfolgt an Hand der Zuordnung des gemessenen Signals in den Farbraum mit Hilfe des Computers 8.

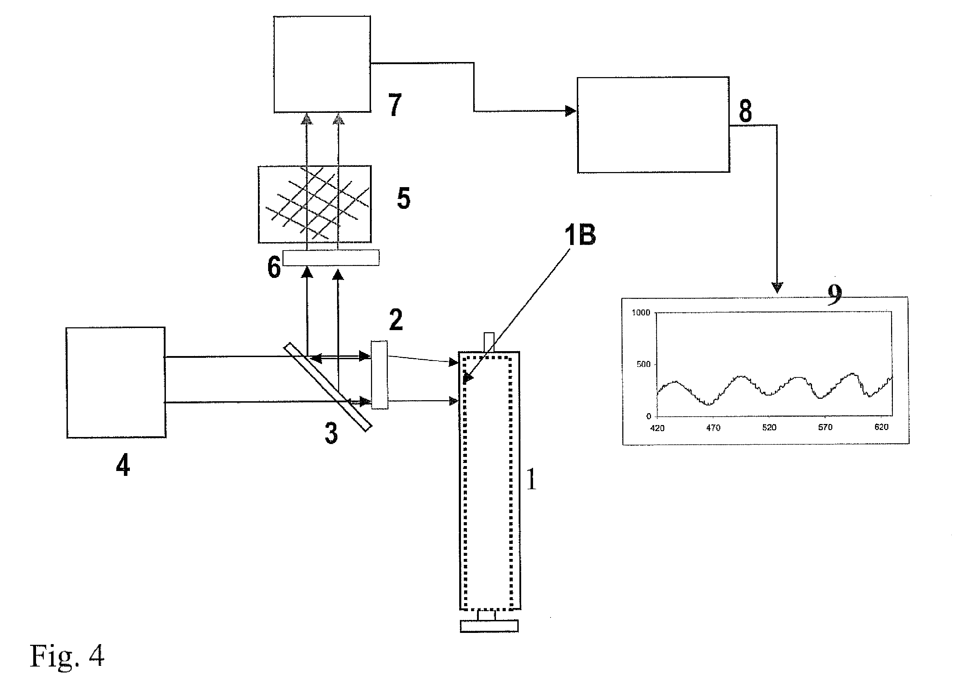

Ein zweites Ausführungsbeispiel zur Schichtdickenbestimmung ist in Fig. 4 zu sehen.

Der Strahl aus einer polychromatischen Lichtquelle 4 wird über einen halbtransparenten Umlenkspiegel 3 und eine Zylinderlinse 2 durch die transparente Wand des Behältnisses 1 auf die Innenseite der Wand eines zylindrischen Gefäßes, beispielsweise einer medizinischen Spritze, die den Silikonfilm 1B trägt, fokussiert. Das reflektierte Licht wird über eine Zylinderlinse 6 auf den Spalt eines abbildenden Polychromators 5 so fokussiert, dass die Fokuslinie der Zylinderlinse 6 genau auf dem Spalt verläuft. Im Polychromator 5 wird das Licht wellenlängengespreizt und mit einem Vielkanaldetektor 7 so aufgenommen, dass eine Richtung des Detektors der Wellenlängenspreitzung entspricht und die andere Richtung des flächigen Detektors der Ortsauflösung, die schon entlang des Spalts realisiert wurde. Das Signal wird digitalisiert und zur Darstellung 9 der ortsaufgelösten Schichtdicke und weiteren Signalverarbeitung an einen Computer 8 weitergeleitet.

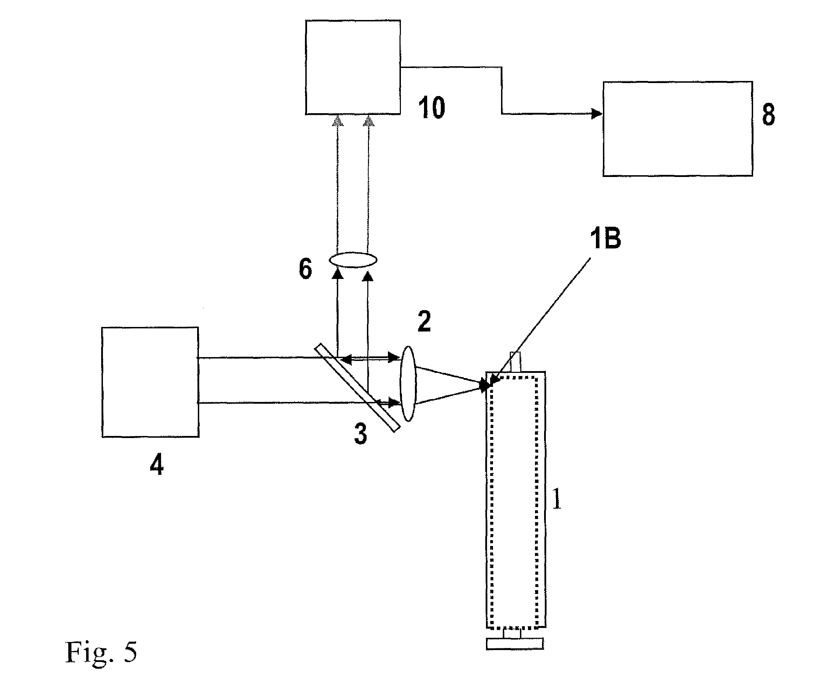

In einem zweiten Ausführungsbeispiel für die Homogenitätsbestimmung, das in Abb. 5 dargestellt ist, wird auf die Innenseite des Behältnisses 1 quasimonochromatisches Licht mit einer sphärischen Linse 2 fokussiert. Das reflektierte Licht wird durch einen Spiegel 3 umgelenkt und über eine Linse 6 auf einen zweidimensionalen Bilddetektor 10, z. B. eine Videokamera, abgebildet. Das Signal wird digitalisiert und zur Darstellung und weiteren Signalverarbeitung an einen Computer 8 weitergeleitet.

Der Messbereich kann in diesem Fall nicht wellenlängenabhängig festgestellt werden, sondern über das Interferenzmuster: Es werden Linien gleicher Dicke angezeigt. Für die Dicke der dunklen Bereiche gilt:

D=m*Lambda/2, wobei m- die Interferenzordnung und Lambda - die Wellenlänge im Silikon sind.

Es kann die Gleichmäßigkeit der Schicht beurteilt werden.

## Patentansprüche

1. Verfahren zum Messen von Schichtdicken und Schichthomogenitäten in transparenten, innenseitig gleitmittel- und hydrophobierungsbeschichteten Behältern, **dadurch gekennzeichnet, dass** eine Linse (2) polychromatisches Licht auf die Innenbeschichtung (1B) des Behälters (1) fokussiert, das reflektierte Licht wieder erfasst, in ein Spektrometer (5) eingekoppelt und über einen empfindlichen Vielkanal-Detektor (7) aufgezeichnet wird, und entsprechende Signale an eine Auswerte-Elektronik (8) transferiert werden, die die Signale digitalisiert und aus dem Interferenzmuster die Schichtdicke berechnet.

2. Verfahren nach Anspruch 1, **dadurch gekennzeichnet, dass** das Licht mit einer Zylinderlinse (2) auf die Innenbeschichtung (1B) fokussiert und das reflektierte Licht auf den Spalt eines Polychromators (5) fokussiert wird.

3. Verfahren nach Anspruch 1, **dadurch gekennzeichnet, dass** das reflektierte Licht auf eine Videokamera (11) abgebildet wird und das resultierende Bild zur Beurteilung der Homogenität verwendet wird.

4. Verfahren nach Anspruch 1, **dadurch gekennzeichnet, dass** quasimonochromatisches Licht auf die Innenbeschichtung (1B) des Behälters (1) fokussiert und das reflektierte Licht auf eine Videokamera (11) abgebildet wird, wobei das resultierende Bild zur Beurteilung der Homogenität verwendet wird.

5. Verfahren nach einem der vorherigen Ansprüche, **dadurch gekennzeichnet, dass** das Licht auf die Innenseite eines mit Luft gefüllten Bereiches des zu messenden Behältnisses fokussiert wird.

6. Verfahren nach einem der vorherigen Ansprüche, **dadurch gekennzeichnet, dass** es sich um Licht im Wellenlängenbereich zwischen 200 und 1100 nm handelt.

7. Verfahren nach einem der vorherigen Ansprüche, **dadurch gekennzeichnet, dass** die beschichteten Behältnisse an der Linse (2) vorbei bewegt werden.

8. Verfahren nach einem der Ansprüche 1 bis 6, **dadurch gekennzeichnet, dass** der Behälter in Rotation versetzt wird.

9. Vorrichtung zum Messen von Schichtdicken und Schichthomogenitäten in transparenten, innenseitig gleitmittel- und hydrophobierungsbeschichteten Behältern, **gekennzeichnet durch** eine Linse (3) zum Fokussieren von polychromatischem Licht auf die Innenbeschichtung (1B) des Behälters (1), einen Spiegel (2) zum Wiedererfassen des reflektierten Lichtes, eine Linse (6) zum Einkoppeln des Lichtes in ein Spektrometer (5), einen empfindlichen Vielkanal-Detektor (7) zum Aufzeichnen von vom Spektrometer (5) empfangenen Signalen und Transferieren an eine Auswerte-Elektronik zum Digitalisieren und Berechnen der Schichtdicke aus dem Interferenzmuster.

10. Vorrichtung nach Anspruch 9, **gekennzeichnet durch** eine Videokamera (10) zum Abbilden des reflektierten Lichtes, wobei das resultierende Bild zur Beurteilung der Homogenität verwendet wird.

11. Vorrichtung nach Anspruch 9, **dadurch gekennzeichnet, dass** die Linse (2) zum Fokussieren des Lichtes auf die Innenbeschichtung (1B) des Behälters (1) eine Zylinderlinse ist und das Spektrometer ein Polychromator ist, auf dessen Spalt das reflektierte Licht fokussiert wird.

12. Vorrichtung nach Anspruch 9, 10 oder 11, **gekennzeichnet durch** ein Förderband zum Vorbeibewegen der beschichteten Behälter an der Linse (2).

13. Vorrichtung nach Anspruch 9, 10 oder 11, **gekennzeichnet durch** eine Vorrichtung zum Rotieren der Behälter.

Fig. 1

EP 1 785 692 A2

Fig. 2

Fig. 3

Fig. 4

EP 1 785 692 A2

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SPANJERS L.G.C. ; DE KLEIJN J.P.** The Determination of Traces of Silicon Oil in Pharmaceutical Preparations By Atomic Absorption Spectroscopy. *Pharm. Weekbl. Sci. Ed.,* 1985, vol. 7 (6), 291
- **SPITZE, L.A. ; RICHARDS, D.O.** Surface Studies on Glass Part 1. Contact Angles. *J. Appl. Phys.,* 1947, vol. 18, 904-11
- **GARDELLA J.A., JR. ; GROBE G.L. ; HOPSON W.L. ; EYRING E.M.** Comparison of Attenuated Total Reflectance and Photoacoustic Sampling for Surface Analysis of Polymer Mixtures by Fourier Transform Infrared Spectroscopy. *Anal. Chem.,* 1984, vol. 56, 1169-1177